Europäisches Patentamt

European Patent Office

Office européen des brevets

(11) Publication number: **0 277 598 B1**

## EUROPEAN PATENT SPECIFICATION

(45) Date of publication of patent specification: **20.04.94** (51) Int. Cl.5: **C08J 3/22**, C08L 23/08

(21) Application number: **88101268.6**

(22) Date of filing: **28.01.88**

(54) Masterbatch resin composition for coloring.

(30) Priority: **28.01.87 JP 15983/87**

(43) Date of publication of application:
**10.08.88 Bulletin 88/32**

(45) Publication of the grant of the patent:
**20.04.94 Bulletin 94/16**

(84) Designated Contracting States:
**DE NL**

(56) References cited:
**EP-A- 0 001 110**
**EP-A- 0 237 062**
**EP-A- 0 268 843**
**GB-A- 1 126 017**
**US-A- 3 418 270**

(73) Proprietor: **FUJI PHOTO FILM CO., LTD.**
**210 Nakanuma**
**Minami Ashigara-shi**
**Kanagawa 250-01(JP)**

(72) Inventor: **Akao, Mutsuo Fuji Photo Film Co.**
**Ltd.**
**2-1 Ougi-cho, 1-chome**
**Odawara-shi Kanagawa(JP)**

(74) Representative: **Patentanwälte Grünecker,**
**Kinkeldey, Stockmair & Partner**
**Maximilianstrasse 58**
**D-80538 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

Various light-shielding packaging materials for photographic photosensitive materials and colored packaging materials for magnetic materials are composed of a polyolefin resin or a composition thereof containing a light-shielding material, a coloring pigment or a dye. The polyolefin resin employed is polyethylene resin, polypropylene resin, polystyrene resin or the like. Such light-shielding packaging materials for photographic photosensitive materials include magazines, cartridges, disks, light-shielding containers for loading in a light room, containers for film cartridge, various containers for camera bodies and light-shielding moistureproof bags, and the colored packaging materials for magnetic materials include book cases for VTR, magnetic tape cartridges for a video tape or an audio tape, jackets for a floppy disk, floppy disk cartridges and 8 mm video tape magazines.

Heretofore, these packaging materials were generally colored by a compound coloring method wherein the main resin of a polyolefin resin or a polyolefin resin composition in a state of powder, pellet or melt is mixed with a light-shielding material, a coloring pigment or a dye in a state of powder or granule. The mixture is supplied to an extruder, and therein it is melted and kneaded. The molten mixture is extruded in strand shape, and cut into pellets utilized for the molding of packaging materials. However, in particular factories where it is necessary to keep the working environment clean such as a factory producing photographic photosensitive materials, it is not easy to avoid a working environment pollution by the fine powder of pigments. Accordingly, the inventor has investigated a suitable method substituting the compound coloring method, and developed a masterbatch method (Japanese Patent KOKAI No. 61-179738).

Packaging materials must completely shield photographic photosensitive materials from light, and accordingly, large amounts of light-shielding materials such as carbon black must be blended. As a result, when the same resin as the main resin was used as masterbatch resin, various problems arose, such as fogging of the photographic photosensitive materials because of insufficient dispersion of the light-shielding material and inferior appearance or touch because of lumps of the light-shielding material. The lumps also resulted in molding trouble by clogging the gate of the molding machine with the lumps, scratches and indentations of packaging materials, and abrasion marks and scratches of photographic photosensitive materials occurred. For example, when a mixture of 70 wt. % of polystyrene resin and 30 wt. % of carbon black was extruded in strands by an extruder, the extruded molten mixture was not uniform. As a result, it became fragile, and the strand drawn out was frequently snapped off. Besides, when a carbon black masterbatch was prepared by using low density polyethylene resin usable for inflation films having a melt index of 2.4 g/10 min and a density of 0.923 g/cm$^3$ as the base resin for masterbatch, the mixing of the base resin with carbon black by the extruder was not uniform. As a result it became fragile, and the strand drawn out was frequently snapped off. In order to improve mixing, a large quantity of lubricant such as a higher fatty acid or a metal salt thereof was added to the mixture, and thereby, the masterbatch containing about 30 wt. % of carbon black could be prepared. However, melting of the masterbatch pellets was still not good, and lumps appeared. Therefore, thin films could not be produced. Moreover, when the light-shielding moistureproof bag directly touched photographic photosensitive materials, abrasion mark troubles, pressure mark troubles, scratch troubles and the like occurred.

GB-A-1126017 discloses a process for the introduction of additives into plastics or wax melts by the production of a concentrated solution or a concentrated dispersion of the additives and working the concentrate into the plastics melts or wax melts, wherein a solvent or dispersing agent comprising molten copolymers of ethylene with vinyl acetate or with acrylic acid esters having a mean molecular weight of between 1200 and 8000 is used.

It is the object of the invention to provide a masterbatch resin composition for coloring a packaging material wherein a light-shielding material, a coloring pigment or a dye are uniformly dispersed in a high concentration, which can be extruded in strands without snapping off and which is excellent in mixing with various polyolefin resins used as main resin.

The present invention provides a masterbatch resin composition for coloring a packaging material for photographic photosensitive materials comprising 30 to 95 wt.% of ethylene-ethyl acrylate copolymer resin having more than 7 wt.% of ethyl acrylate unit portion and a melt index of 3 to 20 g/10 min and the remainder being selected from at least one light-shielding material, coloring pigment or dye optionally with further additives.

As to the polymerization ratio of each monomer of the ethylene-ethyl acrylate copolymer (EEA) resin, the portion of ethyl acrylate unit is more than 7 wt. %, usually 7 to 50 wt. %, preferably 10 to 30 wt. %, more preferably 15 to 25 wt. %. The melt index of the EEA resin is 3 to 20 g/10 min preferably 3 to 15 g/10 min . Examples of such an EEA resin include "NUC-6220", "DPDJ-6182", "NUC-6170", "MB-830" and "WN-930" (all trade names, products of Nippon Unicar Co., Ltd.)

2

The light-shielding materials include every material not transmitting visible and ultraviolet light. Representative light-shielding materials are carbon black, metal powder and metal fiber. Carbon black, aluminum powder and its paste from which volatile components are removed are preferable for the packaging material for photographic photosensitive materials in view of the light-shielding ability, quality and costs.

Carbon blacks are divided into gas black, oil furnace black, anthracene black, acetylene black, lamp black, vegetable black and animal black according to their origin. Among these, oil furnace carbon black is preferable in terms of light-shielding characteristics, costs and improvement of properties. On the other hand, since acetylene black and Ketschen carbon black have antistatic characteristics, they are also preferred, though they are expensive. They may be blended to the oil furnace black in order to improve its characteristics. A suitable pH of carbon black is at 5 to 9, and a suitable mean particle size is 10 to 50 nm (m$\mu$). Particularly, an oil furnace carbon black having a pH of 6 to 9 and a mean particle size of 15 to 30 nm (m$\mu$) is preferred. By using a carbon black of such a pH and particle size, a packaging material having the following merits is obtained. The occurrence of fogging is rare, an increase or decrease of photosensitive rarely happens, the light-shielding ability is large, and lumps of carbon black and pinholes such as fish eyes are hardly generated.

The coloring pigments and dyes include, for example, iron oxide, zinc white, titanium oxide, clay, calcium carbonate, mica, barium sulfate, talc, cadmium pigments, chrome yellow and red iron oxide.

The kinds of the additives are not limited, however, blending of a lubricant is preferred in order to improve the uniformly mixing of the light-shielding material or the coloring pigment or dye and to decrease the friction coefficient against extruder and other processing machines.

Examples of commercial lubricants suitable for the present invention include;

Silicone lubricants; "SHINETSU SILICONE" (Shinetsu Chemical Co., Ltd.) "TORAY SILICONE" (Toray Silicone Co., Ltd.).

Oleic acid amide lubricants; "ARMOSLIP-CP" (Lion Akzo Co., Ltd.), "NEWTRON" and "NEWTRON E-18" (Nippon Fine Chemical Co., Ltd.), "AMIDE-O" (Nitto Kagaku K.K.), "DIAMID O-200" and "DIAMID G-200" (Nippon Kasei Chemical Co., Ltd.).

Erucic acid amide lubricants; "ALFLOW P-10" (Nippon Oil and Fats Co., Ltd.).

Stearic acid amide lubricants; "ALFLOW S-10" (Nippon Oil and Fats Co., Ltd.), "NEWTRON 2" (Nippon Fine Chemical Co., Ltd.), "DIAMID 200" (Nippon Kasei chemical Co., Ltd.).

Bis fatty acid amide lubricants; "BISAMIDE" (Nitto Kagaku K.K.), "DIAMID-200 BIS" (Nippon Kasei Chemical Co., Ltd.), "ARMOWAX-EBS" (Lion Akzo Co., Ltd.).

Alkylamine lubricants; "ELECTROSTRIPPER TS-2" (Kao Corp.).

Representative other additives usable for the resin composition are illustrated as follows:

(1) Plasticizer; phthalic acid esters, glycol ester, fatty acid esters, phosphoric acid esters.

(2) Stabilizer; lead compounds, cadmium compounds, zinc compounds, alkaline earth metal compounds, organic tin compounds.

(3) Antistatic agent; cationic surfactants, anionic surfactants, nonionic surfactants, ampholytic surfactants.

(4) Flame retardant; phosphoric acid esters, phosphoric acid ester halides, halides, inorganic materials, polyols containing phosphor.

(5) Filler; alumina, kaolin, clay, calcium carbonate, mica, talc, titanium oxide, silica.

(6) Reinforcing agent; glass lobing, metallic fiber, glass fiber, glass milled fiber, carbon fiber.

(7) Blowing agent; inorganic blowing agents (ammonium carbonate, sodium hydrogen carbonate), organic blowing agents (nitroso compounds, azo compounds).

(8) Vulcanizing agent; vulcanization accelerator, acceleration assistant.

(9) Deterioration preventing agent, ultraviolet absorber, antioxidant, metal deactivator, peroxide decomposing agent.

(10) Nucleating agent; organic nucleating agents, inorganic nucleating agents,

(11) Coupling agent; silane compounds, titanium compounds, chromium compounds, aluminum, compounds.

(12) Various thermoplastic resins, rubbers.

The resin compound of the invention contains 30 to 95 wt. % of the aforementioned EEA resin. The remainder may be a light-shielding material or a coloring pigment or a dye alone. The light-shielding material or the coloring pigment or the dye may be a mixture of two or more kinds of light-shielding materials, coloring pigments or dyes. Besides, one or more additives may further be added. In the case that a lubricant is blended, a suitable content is 0.01 to 2 wt. %. If the content is less than 0.01 wt. %, moldability is poor. Shipping character also becomes insufficient, and troubles frequently occur during processing. While, if the content is beyond 2 wt. %, the resin composition becomes sticky, acid dusts adhere to it. The molding cycle is elongated because of screw slip. In the case of a molding film, the thickness of the film becomes uneven. However, the maximum content may be raised to about 10 wt. % in the case of higher fatty acid lubricants such as oleic acid lubricants and stearic acid lubricants. The MI of the masterbatch resin composition is preferably higher than the main resin. The masterbatch resin composition of the invention is used for coloring the main resin, and the color concentration of the resin composition is three or more times higher than the final object concentration in order to avoid a change in properties of the main resin and a decrease of coloring costs.

The resin composition of the invention may be produced by mixing using a single-shaft or double-shaft extruder, a heating roller or a banbury mixer. Instead, prescribed additives such as the light-shielding material, the coloring pigment or dye, other additives or modifiers may be mixed into the solution of the EEA resin, and then the solvent is evaporated.

At the time of producing the resin composition of the invention, less than 40 wt. % of another polyolefin resin may be added. Particularly, when a part of the main resin is previously blended into the masterbatch resin composition, the blending ability to the main resin or the dispersibility of the masterbatch resin composition may be improved. On the other hand, EEA resin granules having different sizes or two or more kinds of EEA resin may be used for raising the extrusion rate of the masterbatch resin composition.

The main resins suitable for blending with the masterbatch resin composition of the invention include low density polyethylene resin, medium density polyethylene resin, high density polyethylene resin, linear low density polyethylene resin, ethylene-propylene copolymer resin (random type or block type), ethylene-(butene-1) copolymer resin, propylene-(butene-1) copolymer resin, ethylene-propylene-(butene-1) copolymer resin, poly(butene-1) resin, polystyrene resin, poly(methyl methacrylate) resin, styrene-acrylonitrile copolymer resin, ABS resin, polypropylene resin, crystalline propylene-$\alpha$-olefin copolymer resin, modified polypropylene resin, modified polyethylene resin, polypropylene-maleic anhydride graft copolymer resin, chlorinated polyolefin resin such as chlorinated high density polyethylene resin, chlorinated low density polyethylene resin, chlorinated polyethylene copolymer resin and chlorinated atactic polypropylene resin, ethylene-vinyl acetate copolymer resin, ethylene ionomer resin (copolymer of ethylene and unsaturated acid is crosslinked by metal ion), poly(4-methylpentene-1) resin, ethylene-acrylic acid copolymer resin, ethylene-methylacrylate copolymer resin, vinyl chloride-propylene resin, ethylene-vinyl alcohol copolymer resin, crosslinked polyethylene resin (electron rays irradiation crosslinking, chemical crosslinking, etc.), polyisobutylene resin, ethylene-vinyl chloride copolymer resin and poly(1,2-butadiene) resin.

The colored resin obtained from the masterbatch resin composition of the invention is suitable for injection molding, inflation process and T die extrusion. In the case of a film, it may be a single film or a coextruded multilayer film.

The masterbatch resin composition of the invention is easily kneaded and extruded by an extruder, and every component of the resin composition is homogeneously mixed by the extruder. Moreover, the masterbatch is easily weighed because of not scattering, and mixed with the main resin. The masterbatch is suitable for automatic machines, and automatic weighing, feeding and mixing are carried out without troubles such as clogging and uneven transportation. Particularly, one masterbatch composed of the resin composition of the invention can be blended with almost all polyolefin main resins. The molded products including containers and films have a uniform color, and lumps do not remain.

## EXAMPLES

### Product of the Invention I

68 wt. % of EEA resin ("NUC 6170", Nippon Unicar Co., Ltd., Ethyl acrylate unit content; 18 %, MI; 6 g/10 min, Density; 0.931 g/cm$^3$), 30 wt. % of oil furnace carbon black ("#44B", Mitsubishi Chemical Industries Ltd., Mean particle size; 21 nm (m$\mu$)) and 2 wt. % of dimethylpolysiloxane ("KF-96", Shinetsu Chemical Co., Ltd.) were mixed and extruded by a double-shaft extruder ("POM 30", Ikegai Corp.) to produce coloring masterbatch pellets. 10 parts by weight of the coloring masterbatch pellets were mixed with 90 parts by weight of the pellets of high pressure branched low density polyethylene (LDPE) resin ("DFD-0111", Nippon Unicar Co., Ltd., MI; 2.4 g/10 min, Density; 0.923 g/cm$^3$), and molded into an inflation film having a thickness of 50 $\mu$m by an inflation film molding machine (Placo Co., 100 mm $\varnothing$ ring die).

### Product of the Invention II

10 parts by weight of the same coloring masterbatch pellets as used in the product of the invention I were mixed with 90 parts by weight of pellets of low pressure linear low density polyethylene (L-LDPE) resin ("ULTZEX 2021L", Mitsui Petrochemical Industries Co., Ltd., MI; 2.1 g/10 minutes, Density; 0.922

g/cm$^3$), and molded into an inflation film having a thickness of 50 $\mu$m by the same inflation film molding machine as above.

Conventional Product I

An inflation film having a thickness of 50 $\mu$m was prepared in the same manner as the product of the invention I, except that the same LDPE resin ("DFD-0111", Nippon Unicar Co., Ltd.) as the main resin was used as the base resin instead of the EEA resin.

Product of the Invention III

5 wt. % of the same coloring masterbatch pellets as used in the product of the invention I were mixed with 20 wt. % of the same L-LDPE resin as used in the product of the invention II and 75 wt. % of propylene-ethylene random copolymer (PP) resin ("J-950D", Mitsui Petrochemical Industries Co., Ltd., MI; 40 g/10 min, Density; 0.920 g/cm$^3$). A light-shielding tray body for loading sheet films in a light room was molded by injection molding using this resin mixture.

Comparative Product I

70 wt. % of the above PP resin ("J-950D", Mitsui Petrochemical Industries Co., Ltd.) and 30 wt. % of the same carbon black as used in the product of the invention I were mixed and extruded by the same extruder as employed in the product of the invention I to produce coloring masterbatch pellets. 5 wt. % of the coloring masterbatch pellets were mixed 95 wt. % of the same PP resin ("J-950D", Mitsui Petrochemical Industries Co., Ltd.) as used in the product of the invention III, and the same tray body for loading sheet films in a light room as the product of the invention III was molded by injection molding using this resin mixture.

Comparative Product II

68 wt. % of the aforementioned L-LDPE resin ("ULTZEX 2021L", Mitsui Petrochemical Industries Co., Ltd.), 30 wt. % of the same carbon black as used in the product of the invention I ("#44B", Mitsubishi Chemical Industries Ltd.) and 2 wt. % of dimethylpolysiloxane were mixed and extruded by the same extruder as employed in the product of the invention to produce coloring masterbatch pellets. 5 wt. % of the coloring masterbatch pellets were mixed with 20 wt. % of the L-LDPE resin and 75 wt. % of the PP resin, and the same tray body for loading sheet films in a light room was molded by injection molding.

Product of the Invention IV

68 wt. % of the same EEA resin ("NUC 6170", Nippon Unicar Co., Ltd.), 30 wt. % of aluminum paste (Tokai Metals Co.) and 2 wt. % of stearic acid were mixed and extruded by the same extruder as employed in the product of the invention I to produce coloring masterbatch pellets. The volatile components of the above aluminum paste were previously removed to lower than 0.1 wt. %. 10 wt. % of the coloring masterbatch pellets were mixed with 89.9 wt. % of L-LDPE resin ("MORETEC 0238N", Idemitsu Petrochemical Co., Ltd., $\alpha$-olefin; octene-1, MI; 2.0 g/10 min, Density; 0.920 g/cm$^3$) and 0.1 wt. % of oleic acid amide ("ARMOSLIP CP", Lion Akzo Co., Ltd.), and molded into an inflation film having a thickness of 50 $\mu$m by the same inflation film molding machine as employed in the product of the the invention I.

Product of the Invention V

98 wt. % of polystyrene resin containing synthetic rubber ("ESBRITE HH 401", Sumitomo Chemical Co., Ltd., MI; 3.7 g/10 min) was mixed with 2 wt. % of the carbon black coloring masterbatch pellets prepared in the product of the invention I, and a spool for photographic film was molded by an injection molding machine (Sumitomo Heavy Industries Ltd.) at a mold clamping pressure of 150 t.

Product of the Invention VI

98 wt. % of polystyrene resin containing synthetic rubber ("ESBRITE NA 301", Sumitomo Chemical Co., Ltd., MI; 9 g/10 min) was mixed with 2 wt. % of the aluminum coloring masterbatch pellets prepared in

5

the product of the invention IV, and a magazine for "SINGLE-EIGHT" 8 mm film (Fuji Photo Film Co., Ltd.) was molded by the same injection molding machine as employed in the product of the invention V at a mold clamping pressure of 150 t.

Various properties of the above molded products were evaluated during their productions and tabulated in Table 1.

Table 1

| | Invention I | Invention II | Conventional I | Invention III | Comparative I | Comparative II | Invention IV | Invention V | Invention VI |
|---|---|---|---|---|---|---|---|---|---|
| Molded Product | Inflation Film | " | " | Tray Body | " | " | Inflation Film | Film Spool | Film Magazine |
| Masterbatch Base Resin | EEA | EEA | LDPE | EEA | PP | PP | EEA | EEA | EEA |
| Masterbatch Light-Shielding Material Conc. | Carbon Black 30 | " | " | " | " | " | Al Paste 30 | Carbon Black 30 | Al Paste 30 |
| Main Resin | LDPE | L-LDPE | LDPE | PP L-LDPE | PP | PP L-LDPE | L-LDPE | Polystyrene | " |
| Light-Shielding Material Content (wt. %) of Molded Product | 3 | 3 | 3 | 1.5 | 1.5 | 1.5 | 3 | 0.6 | 0.6 |
| Blending Ability in Masterbatch | A | A | C | A | D | B | B | A | B |
| Blending Ability with Main Resin | A | A | C | A | D | B | B | A | B |
| Strength of Molded Product | B | A | D-E | A | E | A | A | B | C |
| Generation of Lumps | A | A | C | B | C | C | A | B | A |

Evaluations in Table 1 were carried out as follows:

| A | very excellent | B | excellent |
|---|---|---|---|
| C | practical | D | having a problem |
| E | impractical | | |

Testing methods were as follows:

| Melt Index; | ASTM D-1238 |
|---|---|
| Density; | ASTM D-1505 |

## Claims

1. A masterbatch resin composition for coloring a packaging material for photographic photosensitive materials comprising 30 to 95 wt.% of ethylene-ethyl acrylate copolymer resin having more than 7 wt.% of ethyl acrylate unit portion and a melt index of 3 to 20 g/10 min and the remainder being selected from at least one light-shielding material, coloring pigment or dye optionally with further additives.

2. The masterbatch resin composition of claim 1 wherein said remainder is carbon black or aluminum powder.

3. The masterbatch resin composition of claim 1 wherein said remainder is carbon black or aluminum powder and a lubricant.

4. The masterbatch resin composition of claim 1 which is blended with a polyolefin main resin having a melt index lower than said masterbatch resin composition.

5. A process for preparing a packaging material for photographic photosensitive materials which comprises blending a masterbatch resin compound according to any of claims 1 to 4 with a polyolefin resin.

## Patentansprüche

1. Masterbatch-Harzzusammensetzung zum Färben eines Verpackungsmaterials für photographische lichtempfindliche Materialien, umfassend 30 bis 95 Gew.-% Ethylen-Ethylacrylat-Copolymerharz mit mehr als 7 Gew.-% Ethylacrylat-Einheits-Anteil und einem Schmelzindex von 3 bis 20 g/10 min und wobei der Rest ausgewählt ist aus mindestens einem lichtabschirmenden Material, färbenden Pigment oder Farbstoff, gegebenenfalls mit weiteren Additiven.

2. Masterbatch-Harzzusammensetzung nach Anspruch 1, worin der Rest Ruß oder Aluminiumpulver ist.

3. Masterbatch-Harzzusammensetzung nach Anspruch 1, worin der Rest Ruß oder Aluminiumpulver und ein Gleitmittel ist.

4. Masterbatch-Harzzusammensetzung nach Anspruch 1, welche mit einem Polyolefingrundharz mit einem Schmelzindex, der niedriger als der der Masterbatch-Harzzusammensetzung ist, vermischt wird.

5. Verfahren zum Herstellen eines Verpackungsmaterials für photographische lichtempfindliche Materialien, welches das Vermischen einer Masterbatch-Harzverbindung nach einem der Ansprüche 1 bis 4 mit einem Polyolefinharz umfaßt.

## Revendications

1. Composition mélange-mère de résine pour colorer un matériau d'emballage pour matières photographiques photosensibles comprenant de 30 à 95% en poids de résine copolymère éthylène-acrylate d'éthyle comportant plus de 7% en poids de partie unitaire acrylate d'éthyle et un indice de fusion de 3 à 20 g/10 min, le reste étant choisi parmi au moins une matière protectrice contre la lumière, un pigment ou teinture colorant(e) et éventuellement d'autres additifs.

2.  Composition mélange-mère de résine de la revendication 1 dans laquelle ledit reste est du noir de fumée ou une poudre d'aluminium.

3.  Composition mélange-mère de résine de la revendication 1 dans laquelle ledit reste est du noir de fumée ou de la poudre d'aluminium et un lubrifiant.

4.  Composition mélange-mère de résine de la revendication 1 qui est mélangée avec une résine principale de polyoléfine ayant un indice de fusion inférieur à celui de ladite composition mélange-mère de résine.

5.  Procédé de préparation d'un matériau d'emballage pour matières photographiques photosensibles dans lequel on mélange un composé mélange-mère de résine selon l'une quelconque des revendications 1 à 4 avec une résine de polyoléfine.